# EUROPÄISCHE PATENTSCHRIFT

(11) **EP 2 921 599 B1**
(45) Veröffentlichungstag und Bekanntmachung des Hinweises auf die Patenterteilung: **27.11.2019**
(21) Anmeldenummer: 15158706.0
(22) Anmeldetag: 11.03.2015
(51) Int. Cl.: E03F 3/06, E01F 5/00, F16L 1/036

(54) **ELEMENT ZUM AUFBAU EINES KANALS UND VERFAHREN ZUR VERLEGUNG VON ELEMENTEN**
ELEMENT FOR THE CONSTRUCTION OF A CHANNEL AND METHOD FOR LAYING ELEMENTS
ÉLÉMENT DE MONTAGE D'UN CANAL ET PROCÉDÉ DE POSE D'ÉLÉMENT

(30) Priorität: 17.03.2014 CH 4042014
(43) Veröffentlichungstag der Anmeldung: 23.09.2015
(73) Patentinhaber: DSE systems AG, 8723 Maseltrangen (CH)
(72) Erfinder: De Zanet, Primo, 9630 Wattwil (CH)
(74) Vertreter: Hepp Wenger Ryffel AG

(56) Entgegenhaltungen:
- GB-A- 2 181 206
- GB-A- 2 296 304
- KR-A- 20010 046 824
- US-A- 1 130 508
- US-A- 1 184 634

## Beschreibung

Die vorliegende Erfindung betrifft ein Element zum Aufbau eines Kanals sowie ein Verfahren zum Verlegen von Elementen.

Beim Bau von Werkleitungs- und Kanalisationsnetzen in verschiedensten Grössen, insbesondere von unterirdischen Werkleitungs- und Kanalisationsnetzen oder von Abwasserkanälen treten verschiedene Probleme auf. Die bekannteste Art und Weise wie solche grosse Abwasserkanäle gefertigt werden, besteht darin, dass jeweils auf einigen wenigen Metern Länge das Erdreich ausgehoben und ein Fundament ausgegossen wird, welches die Geometrie der späteren Rinne des Kanals bereits enthält. Alternativ wird das Fundament nachträglich mit einem Innenaufbau und einer Rinne ergänzt. Nach Trocknung des Betons wird eine Schalung erstellt, mit der die Seitenwände und die Decke des Kanals gegossen werden. Aufgrund immer wechselnder Bedingungen ist eine gleichbleibende Qualität nicht gewährleistet. Diese Bauweise ist umständlich und führt zu langwierigen Baustellen, da die in einem Schritt zu bearbeitende Länge begrenzt ist. Solche Baustellen sind insbesondere in städtischen Gebieten unerwünscht.

Aus dem Stand der Technik sind verschiedene Abwassersysteme bzw. Elemente zum modularen Aufbau eines Kanals, insbesondere für Abwassersysteme bekannt.

Die US 2011/0255922 offenbart beispielsweise Elemente zur Ausgestaltung eines Abwasserkanals mit einem eckigen Querschnitt. Zur Vermeidung von Fremdkörpereinschlüssen zwischen einzelnen Elementen wird am oberen Ende eines jeden Elementes eine vorstehende Lippe zur Verfügung gestellt, die in einer komplementären Ausgestaltung eines zweiten Elementes eingreift, so dass die Elemente mit einer vertikalen Schwenkbewegung versetzt werden können. Nachteilig an diesen Elementen ist insbesondere der Umstand, dass solche Elemente nicht fest miteinander verbunden sind und die Schwenkbewegung nur stoppt, falls das zweite Element auf dem vorbereiteten Untergrund zu liegen kommt. Entsprechend muss der Untergrund genauestens vorbereitet sein, um die Elemente optimal aufeinander ausgerichtet verlegen zu können. Durch die vorstehende Lippe weisen die Elemente längs ihrer Schnittstelle unterschiedliche Geometrien auf. Diese unterschiedliche Geometrien erfordern speziell darauf abgestimmte Dichtungen, wenn ein Abdichten der Elemente erforderlich ist.

Die JP 2005248633 verfolgt eine Lösung, bei der seitlich eines Kanalelementes eine Vielzahl an Bauteilen angebracht werden muss, die es ermöglichen, dass ein zu versetzendes Element über eine Kulisse an ein bereits versetztes Element herangezogen wird. Die Kanalelemente müssen parallel zu ihrer Schnittstelle versetzt werden sowie längs ihrer Achse in absoluter Waagerechter Position aufgehängt werden um zu gewährleisten, dass der Mechanismus funktioniert. Besonders nachteilig ist hier der Umstand, dass, sobald die Elemente nicht auf der gleichen Ebene aufliegen, die Funktion des Mechanismus nicht mehr gewährleistet ist. Ausserdem muss nach Setzen der Elemente der Mechanismus verriegelt werden und eine funktionsbedingte Öffnung verschlossen werden. Der Platz zum Verriegeln des Mechanismus ist oft nicht vorhanden. Insbesondere in innerstädtischen Baustellen sind die Platzverhältnisse eng. Weiter kann durch die offene Bauweise des Verbindungsmittels und das damit einhergehende Fehlen einer seitlichen Führung nicht gewährleistet werden, dass die Kanalelemente in einer Achse verbaut werden.

Ein weiters Kanalelement ist aus der KR 2001-0046824 bekannt. Runde Abwasserrohre werden mittels einer schrägen Kulisse und einem Verriegelungshaken aneinander befestigt. Die Kulisse dient als Führung beim Zusammensetzen. Sobald beide Rohre endgültig zueinander ausgerichtet sind, kann im oberen Bereich mit dem Verriegelungshaken eine Verriegelung erstellt werden. Besonders nachteilig ist die im unteren Drittel liegende Positionierung der Kulisse, da durch das Eigengewicht des Rohres die Schnittstelle zwischen zwei zu verbindenden Elementen in ihrem oberen Bereich zur Spaltenbildung tendiert. Ausserdem muss beim Verlegen der einzelnen Rohre genau darauf geachtet werden, dass alle drei Verbindungsmittel in Linie zu ihren korrespondierenden Aufnahmen ausgerichtet sind.

Allen diesen Systemen fehlt es an einer einfachen Verlegemethode. Ausserdem kann nicht sichergestellt werden, dass die einzelnen Elemente beim Zuschütten mit Erdreich ausgerichtet bleiben und nicht verrutschen um eine fortwährende Abdichtung zwischen den Elementen gewährleisten können. Dies ist insbesondere wichtig, wenn Abwässer durch ein Gebiet mit Grundwasser geleitet werden muss.

Es ist Aufgabe der Erfindung, die Nachteile des Standes der Technik zu überwinden. Insbesondere soll ein Element zum Aufbau eines Kanals und ein Verfahren zum Verlegen von Elementen zur Verfügung gestellt werden, welche ein einfaches und präzises Ausrichten und Zusammenfügen von Elementen erlauben.

Diese Aufgabe wird durch die in Anspruch 1 definierte Vorrichtungen gelöst. Weitere Ausführungsformen ergeben sich aus den abhängigen Patentansprüchen.

Ein Element im Sinne der Erfindung ist jede mögliche Form von Rohren, sowohl mit offenem als auch geschlossenem Querschnitt, unabhängig davon, welchen Querschnitt ein solches Element aufweist. So sind sowohl ovale als auch runde, sowie polygonale Querschnitte denkbar. Auch Querschnitte, die in einem unteren Bereich speziell ausgeformt sind, z.B. mit einer oder mehreren Abwasserrinnen, sind durchaus denkbar.

Einrichtungen zur Zufuhr von Frischwasser, aber auch zur Abfuhr von Abwasser, sowohl Brauchwasser als auch Grauwasser und dergleichen, werden typischerweise als Kanal bezeichnet. Kanäle können sowohl offene als auch geschlossene Querschnitte aufweisen und sowohl oberirdisch sichtbar als auch als unterirdische Rohrsysteme verlegt sein. Diese können fortlaufend oder in einzelnen Etappen erstellt werden. Typischerweise ist ein solcher Kanal mit einem Gefälle von 0.25% bis 5%, bevorzugt von 0.5% bis 4% und besonders bevorzugt von 0.75% bis 2.5% zur Horizontalen ausgestattet. Je nach Einsatzort können auch verschiedene Normen zum Einsatz kommen, über welche das Gefälle definiert ist, in der Schweiz beispielsweise die SIA 190. Unter einer Horizontalen wird hier und im Folgenden eine waagerechte Ebene verstanden.

Eine Vorrichtung zum geführten Zusammenfügen von Elementen, insbesondere von Kanalrohrabschnitten, umfasst mindestens ein erstes und ein zweites Verbindungsmittel. Diese Verbindungsmittel sind an den Endbereichen benachbarter Elemente mit einem geeigneten Befestigungsmittel befestigbar oder befestigt. Die Befestigungsmittel können derart gestaltet sein, dass sie eine Befestigungsfläche aufweisen können und beispielsweise als Platten ausgeführt sind und Löcher zum Anschrauben aufweisen können. Es ist auch vorstellbar, dass die Befestigungsmittel direkt in einem Element integriert sind. Das erste Verbindungsmittel weist ein Führungselement mit einer Führungsfläche auf. Diese Fläche weist bei bestimmungsgemässem Gebrauch eine Neigung zu einer horizontalen Ebene auf. Das zweite Verbindungsmittel weist ein Eingriffselement auf, das derart mit der Führungsfläche zusammenwirkt, dass ein Absenken des zweiten Verbindungsmittels auf das erste Verbindungsmittel ein Zusammenziehen der benachbarten Elemente in einer Fügerichtung bewirkt. Eine vertikal durch das Eingriffselement auf die geneigte Führungsfläche angreifende Kraft wird in eine quer zur angreifenden Kraft wirkende Kraft umgewandelt.

Unter Umwandlung versteht der Fachmann, dass sich die vertikale Kraft durch die geneigte Führungsfläche in eine Kraft mit einer Komponente in Richtung der angreifenden und mit einer Komponente quer zu dieser Kraft aufteilt, also eine quer wirkende Kraft. Diese quer wirkende Kraft zieht nun die Verbindungsmittel der Vorrichtung zusammen.

Die vorgenannte vertikale Kraft ist eine Komponente der Kraft, die durch das Eigengewicht eines zweiten Elementes verursacht wird und in die gleiche Richtung wie die entsprechende Gewichtskraft wirkt. Wenigstens ein Verbindungsmittel weist eine seitliche Führung aus, die zur Begrenzung einer Relativbewegung quer zur Fügerichtung der Elemente zwischen den Verbindungsmitteln dient. Bevorzugt sind solche Führungen im Wesentlichen parallel zur wirkenden Kraft, beziehungsweise zur Fügerichtung. Eine Bewegung quer zur Fügerichtung kann entstehen, wenn die Verbindungsmittel beispielsweise nicht passgenau zusammengefügt werden oder ein Element um dessen Längsachse verdreht montiert wird oder das Element mit einer Neigung zu seiner Längsachse montiert werden muss. Die Begrenzung der Bewegung ist besonders vorteilhaft, da bei der Montage der Monteur nicht unnötig mit vorgängigen Ausrichtarbeiten beschäftigt ist, sondern Elemente aus nahezu jeder Position ohne grösseren Aufwand an die richtige Stelle schaffen kann. Dabei können die Führungen so angeordnet sein, dass innerhalb der zulässigen Relativbewegung ein korrektes Ausrichten gewährleistet wird.

Die seitliche Führung weist erfindungsgemäß einen konischen Führungsbereich auf. Dies ermöglicht beim Zusammenführen der Verbindungsmittel eine zu deren Längsachse zentrische Ausrichtung, die ohne zusätzliches Eingreifen eines Monteurs erreicht wird.

Das erste oder das zweite Verbindungsmittel, beziehungsweise der Führungsbereich, kann derart ausgebildet sein, dass es das jeweils andere Verbindungsmittel im bestimmungsgemässem Gebrauch umschliesst. Dies ermöglicht ein einfaches Zusammenfügen der Verbindungsmittel und eine dauerhafte Positionierung der Elemente zueinander.

Die geneigte Führungsfläche kann einen Winkel zu der Befestigungsfläche aufweisen, der zwischen 15° und 75°, bevorzugt zwischen 30° bis 70° und besonders bevorzugt zwischen 40° und 60° liegt. Die Steilheit des Winkels hat einen unmittelbaren Einfluss auf die wirkende Kraft und kann grundsätzlich frei gewählt werden. Die maximale Kraft stellt sich bei ca. 45° ein. Da solche Vorrichtungen aber reibungsbehaftet sind, kann je nach Anwendung ein Winkel abweichend von 45° vorteilhaft sein. Der Fachmann versteht dabei unter dem Begriff maximaler Kraft die Kraft, welche dem Befestigungsmittel maximal zumutbar ist, wobei das Befestigungsmittel nicht ausserhalb üblicher und der Relation der Elemente oder Verbindungsmittel entsprechenden Dimensionen dimensioniert werden muss. Der Winkel von 45° hat sich in Bezug auf eine wie vorliegend beschriebene Vorrichtung dabei besonders vorteilhaft erwiesen. Ein Winkel von 45° ermöglicht eine vorteilhafte Kraftübertragung zwischen dem Befestigungsmittel und dem Element.

Das Eingriffselement kann eine geneigte Eingriffsfläche aufweisen. Beim bestimmungsgemäss zusammengesetzten Verbindungsmitteln kann ein eingeschlossener Winkel zwischen dieser Eingriffsfläche und der Führungsfläche zwischen 45° und -15°, bevorzugt zwischen 30° bis 0° und besonders bevorzugt zwischen 20° bis 10° liegen. Es hat sich gezeigt, dass durch einen Winkel zwischen der Führungsfläche und der Eingriffsfläche die Flächen leicht aufeinander gleiten und eine etwaige Elastizität der Verbindungsmittel ausgeglichen wird. Es versteht sich von selbst, dass das Führungsmittel oder das Eingriffsmittel als Bolzen ausgebildet sein können. Die Führungsfläche oder die Eingriffsfläche reduzieren sich dann auf entsprechende Linien.

Die Führungsfläche und/oder Eingriffsfläche kann eine konkave oder konvexe Biegung aufweisen. Dies vereinfacht eine zentrische Ausrichtung der Verbindungsmittel. Die Führungsbereiche können dann direkt als eine Teilfläche der Führungs- oder Eingriffsflächen ausgebildet sein. Es ist natürlich auch möglich, dass eine der Flächen und/oder das Eingriffselement als Bolzen ausgeführt wird. In diesem Fall reduziert sich eine solche Fläche zu einer Eingriffs- oder Führungslinie, beziehungsweise im Falle einer konvexen oder konkaven Biegung zu einem Eingriffs- oder Führungspunkt.

Die Führungsfläche und die Eingriffsfläche können zumindest teilweise zueinander komplementär ausgeführt sein. Die Flächen können dergestalt ausgeführt sein, dass sie zumindest in ihrer Biegung übereinstimmen. Dies ermöglicht eine besonders präzise Ausrichtung der Verbindungsmittel zueinander.

Die Vorrichtung kann zusätzliche Mittel zum Sichern und/oder zum Verspannen der Verbindungsmittel gegeneinander aufweisen. Hierzu ist beispielsweise eine Spannschraube denkbar. Ebenso sind jedoch auch andere, dem Fachmann bekannte Mittel denkbar. Dies ist besonders vorteilhaft, wenn mehrere Elemente mit entsprechenden Vorrichtungen hintereinander montiert werden.

Ein erfindungsgemässes Element, insbesondere ein Kanalrohrabschnitt, zum Aufbau eines Kanals, umfasst einen ersten Endbereich mit einer Stirnseite und mindestens einen zweiten Endbereich mit einer Stirnseite. Diese Endbereiche, beziehungsweise Stirnseiten sind Schnittstellen zum Anschliessen eines weiteren Elementes. Diese Stirnseiten können im rechten Winkel zu einer Längsachse ausgeführt sein, aber auch schräge Stirnseiten sind vorstellbar. Besonders bevorzugt sind Stirnseiten die im bestimmungsgemässen Gebrauch rechtwinklig zur Waagerechten sind.

Zwischen diesen Stirnseiten ist eine durchgehende Öffnung vorgesehen, die derart gestaltet sein kann, dass eine Innenkontur bereits in weiten Teilen fertig gestellt ist, insbesondere so weit fertig gestellt, dass nach der Montage nur noch ein Anstrich oder eine Beschichtung notwendig ist. Wenn gefordert ist diese Innenkontur vorteilhaft bereits mit mindestens einer Rinne ausgestattet. Bevorzugt weist sowohl die Innenkontur als auch die Aussenkontur eines solchen Elementes einen zumindest teilweise rechteckigen Querschnitt auf, so dass ein rohrartiges Gebilde entsteht. Es sind aber auch runde, ovale oder polygonale Querschnitte vorstellbar.

In einer bevorzugten Ausführungsform erstreckt sich die Öffnung entlang einer geraden Linie zwischen den Stirnseiten aber auch gekrümmte oder zusammengesetzte Linien sind vorstellbar, insbesondere auch Bögen oder Formen, die V-, Y-, T-, X-, oder kreuzförmig sind und in mehreren Stirnseiten beziehungsweise Endbereichen enden. Ein solches Element umfasst mindestens ein erstes Verbindungsmittel einer Vorrichtung zum geführten Zusammenfügen eines weiteren Elementes mit dem Element, insbesondere eine Vorrichtung wie eingängig beschrieben.

Das erste Verbindungsmittel weist ein Befestigungsmittel auf und ist mit diesem am Element befestigt oder befestigbar. Das erste Verbindungsmittel weist ausserdem ein Führungselement mit mindestens einer Führungsfläche auf. Im bestimmungsgemässem Gebrauch ist die Führungsfläche zu einer horizontalen Ebene geneigt. Diese Führungsfläche wirkt derart mit einem Eingriffselement eines zweiten Verbindungsmittels des weiteren Elementes zusammen, dass ein Absenken des weiteren Elementes auf das erste Element ein Zusammenziehen der benachbarten Elemente in einer Fügerichtung bewirkt. Das erste Verbindungsmittel ist in einem oberen Bereich des Elementes angeordnet. Dies ist besonders vorteilhaft, da zum Herstellen der Verbindung ein weiteres Element in einer Schwenkbewegung am ersten Element platziert werden kann. Diese Anordnung ermöglicht es ausserdem, dass das weitere Element zumindest in einem Zwischenschritt vollständig am ersten Element aufgehängt ist oder aufgehängt werden kann.

Eine Komponente der Kraft, die durch das Eigengewicht eines zweiten Elementes verursacht wird und in die gleiche Richtung wie die entsprechende Gewichtskraft zeigt, wird durch die geneigte Führungsfläche in eine Anpresskraft umgewandelt, wie vorliegend beschreiben.

Durch die Anordnung des Verbindungsmittels in einem oberen Bereich kann die Anpresskraft maximiert werden. Entsprechend wird unter dem oberen Bereich ein Bereich oberhalb der zentralen Längsachse des Elementes, insbesondere im oberen Drittel und bevorzugt am oberen Ende des Elementes verstanden. Gleichermassen versteht man unter einem oberen Bereich einen Bereich, der einem im bestimmungsgemässen Gebrauch eine Auflageseite bildenden Bereich abgewandt ist. Es versteht sich von selbst, dass sich die Bezeichnungen auf das Element in seiner bestimmungsgemässen Ausrichtung beziehen.

Das Verbindungsmittel umfasst Befestigungsmittel zum Befestigen am Element. Die Befestigungsmittel können derart gestaltet sein, dass sie eine Befestigungsfläche aufweisen können und beispielsweise als Platten ausgeführt sind und Löcher zum Anschrauben aufweisen können. Es ist auch vorstellbar, dass die Befestigungsmittel direkt in einem Element integriert sind. Typischerweise weist das Mittel zum Befestigen eine Befestigungsfläche auf.

Die geneigte Führungsfläche des Führungselementes kann einen Winkel zu dieser Befestigungsfläche aufweisen, der zwischen 15° und 75°, bevorzugt zwischen 30° und 70° und besonders bevorzugt zwischen 40° und 60° liegt. Die Steilheit des Winkels hat einen unmittelbaren Einfluss auf die Anpresskraft und kann grundsätzlich frei gewählt werden. Die maximale Kraft stellt sich bei ca. 45° ein. Da solche Systeme aus Elementen und Verbindungsmitteln reibungsbehaftet sind, kann je nach Anwendung oder weiteren Gegebenheiten ein Winkel abweichend von 45° vorteilhaft sein. Auch das Eingriffselement des zweiten Elementes kann mit einer geneigten Eingriffsfläche versehen sein. Bei bestimmungsgemäss zusammengesetzten Elementen kann ein eingeschlossener Winkel zwischen dieser Eingriffsfläche und der Führungsfläche zwischen 45° und -15°, bevorzugt zwischen 30° und 0° und besonders bevorzugt zwischen 20° und 10° liegen.

Das Eingriffselement kann Befestigungsmittel zum Befestigen am Element umfassen. Die Befestigungsmittel können derart gestaltet sein, dass sie eine Befestigungsfläche aufweisen können und beispielsweise als Platten ausgeführt sind und Löcher zum Anschrauben aufweisen können. Es ist auch vorstellbar, dass die Befestigungsmittel direkt in einem Element integriert sind. Die Eingriffsfläche kann einen Winkel zu dieser Befestigungsfläche aufweisen, der zwischen 15° und 75°, bevorzugt zwischen 30° bis 70° und besonders bevorzugt zwischen 40° und 60° liegt.

Es hat sich gezeigt, dass durch einen Winkel zwischen der Führungsfläche und der Eingriffsfläche die Flächen leichter aufeinander gleiten und eine etwaige Elastizität des Verbindungsmittels ausgeglichen wird.

Das Verbindungsmittel des Elementes weist im Wesentlichen parallel zur Anpresskraft beziehungsweise zur Fügerichtung eine Führung zur Begrenzung einer quer zur Anpresskraft wirkenden Relativbewegung zwischen dem Element und dem weiteren Element auf. Eine Bewegung in diese Richtung kann entstehen, wenn die Elemente beispielsweise nicht passgenau verbunden werden, ein Element um dessen Längsachse verdreht montiert wird oder das Element mit einer Neigung zu seiner Längsachse montiert werden muss. Die Begrenzung der Bewegung ist besonders vorteilhaft, da bei der Montage ein Monteur nicht unnötig mit vorgängigen Ausrichtarbeiten beschäftigt ist, sondern Elemente aus nahezu jeder Position ohne grösseren Aufwand an die richtige Stelle schaffen kann.

Das Verbindungsmittel des Elementes weist zumindest einen konischen Führungsbereich auf. Dies ermöglicht beim Zusammenführen des Elementes mit einem weiteren Element eine zur Längsachse der Elemente zentrische Ausrichtung des weiteren Elementes, die ohne zusätzliches Eingreifen eines Monteurs erreicht wird. Gleichermassen kann ein Verbindungsmittel des weiteren Elementes mit mindestens einem konischen Führungsbereich ausgestattet sein. Insbesondere ist es vorteilhaft, wenn beide Verbindungselemente mit solchen konischen Führungsbereichen ausgestattet sind.

Das erste oder das zweite Verbindungsmittel, beziehungsweise der Führungsbereich des jeweiligen Verbindungsmittels, kann derart ausgebildet sein, dass das jeweils andere Verbindungsmittel im bestimmungsgemässem Gebrauch umschlossen wird. Dies ermöglicht ein einfaches Zusammenfügen der Verbindungsmittel und eine dauerhafte Positionierung der Elemente zueinander.

Die Führungsfläche des Verbindungsmittels kann eine konkave oder konvexe Biegung aufweisen. Dies vereinfacht eine zentrische Ausrichtung eines weiteren Elementes am ersten Element. Der Führungsbereich kann dann direkt als eine Teilfläche der Führungsfläche ausgebildet sein. Es ist natürlich auch möglich, dass das Verbindungsmittel als Bolzen ausgeführt wird. Die Führungsfläche reduziert sich in einem solchen Fall zu einer Führungslinie, beziehungsweise im Falle einer Biegung des Bolzens zu einem Führungspunkt.

Die Führungsfläche kann dergestalt sein, dass sie zumindest teilweise komplementär zu einer Eingriffsfläche eines zweiten Verbindungsmittels eines weiteren Elementes ausgeführt ist. Dies ermöglicht eine besonders präzise Ausrichtung der Verbindungsmittel zueinander.

Das Element kann Mittel zum Sichern oder zum Verspannen aufweisen. Denkbar ist beispielsweise eine Spannschraube, welche die Verbindungsmittel gegeneinander zieht oder diese in einer gewollten Lage zueinander fixiert. Ebenso sind jedoch auch andere, dem Fachmann bekannte Mittel denkbar. Ein Mittel zum Sichern ist besonders vorteilhaft, wenn mehrere Elemente hintereinander montiert werden.

Die Endbereiche, insbesondere die Stirnseiten der Elemente, können Dichtmittel aufweisen, um ein Element zu einem weiteren Element abzudichten. Dies ermöglicht, dass beim Zusammenfügen der Elemente an ihren Stirnseiten sichergestellt werden kann, dass der Innenraum gegenüber der Umwelt abgedichtet ist. Hierzu ist beispielsweise als Dichtmittel eine Quelldichtung vorteilhaft. Ebenfalls möglich ist die Abdichtung mittels Gummidichtungen, Dichtungsmassen oder festen Klebeverbindungen und/oder ein zusätzliches Ausstreichen der Stirnseite mit einer Dichtmasse. Kombinationen der vorgenannten Möglichkeiten sind vorstellbar. Weiter ist vorstellbar, in den Stirnseiten Kanäle oder Aussparungen vorzusehen, welche erst nach dem Zusammenfügen von zwei Elementen einen geschlossenen Querschnitt bilden. In diesen kann beispielsweise nach dem Fügen eine Dichtmasse als Dichtmittel injiziert werden.

Das Element kann aus einer Mischung aus Zement mit weiteren Zusatzstoffen bestehen. Solche Mischungen sind in vielerlei Varianten von Beton bekannt. Optional kann ein Element aber auch aus Kunststoff, Metall oder Verbindungen davon bestehen. Insbesondere sind auch alle Arten von Stahlbeton denkbar.

Das Element kann mit Mitteln zum Abstützen versehen sein, die beispielsweise als eine Art Fuss ausgebildet sein können. Besonders vorteilhaft sind höhenverstellbare Füsse, da ein Element in der Höhe ausgerichtet werden kann. Mit höhenverstellbaren Füssen ist eine präzise Nivellierung möglich. Dies ermöglicht es ausserdem dass beim Verlegen von Elementen sichergestellt werden kann, dass das Eigengewicht des zweiten Elementes beim Verlegen vollständig durch das Verbindungsmittel aufgenommen wird und damit klare Kraftverhältnisse geschaffen werden. Durch die Füsse können diese Kraftverhältnisse ausgehend vom definierten Zustand wenn das Eigengewicht vollständig am Verbindungsmittel ist, gemäss bevorzugten Anforderungen eingestellt werden.

Ein erfindungsgemässes Verfahren zum Verlegen von Elementen wie vorgängig beschrieben, umfasst in einem ersten Schritt ein Aufstellen und Ausrichten eines ersten Elementes und in einem zweiten Schritt ein Anfügen eines zweiten Elementes an das erste Element in einer Fügerichtung. Diese Schritte erfolgen typischerweise nach vorgängigen, vorbereitenden Massnahmen. Dazu gehört beispielsweise der Aushub eines Grabens das heisst, die Erstellung einer Baugrube, in der Grösse, dass mindestens ein Element Platz findet. Nach dem Aushub muss sodann der Untergrund abhängig von den vorherrschenden Bedingungen als auch vom zu erfüllenden Zweck vorbereitet werden, insbesondere muss eine Fläche erstellt werden. Zu diesem Zweck kann es genügen, wenn der Untergrund beispielsweise planiert oder zusätzlich verdichtet wird. Bevorzugt wird beispielsweise eine Schicht Beton oder Magerbeton oder dergleichen in den Aushub eingebracht und so ein Untergrund geschaffen, der für das weitere Verlegen eines Kanals vorteilhafte Eigenschaften aufweist.

Jedes Element verfügt über mindestens ein Verbindungsmittel, das dazu geeignet ist, die Gewichtskraft des zweiten Elementes in eine Anpresskraft zum ersten Element umzuwandeln, wie vorliegend beschrieben. Zu diesem Zweck umfasst das erste Verbindungsmittel des ersten Elementes ein Führungselement mit einer Führungsfläche und das zweite Verbindungsmittel des zweiten Elementes ein Eingriffselement. Diese wirken derart zusammen, dass ein Absenken des zweiten Elementes auf das erste Element ein Zusammenziehen der beiden Elemente in einer Fügerichtung bewirkt. Wenigstens ein Verbindungsmittel weist eine Führung aus, die eine seitliche Relativbewegung quer zur Fügerichtung der Elemente zwischen den Elementen begrenzt. Bevorzugt sind solche Führungen im Wesentlichen parallel zur Anpresskraft, beziehungsweise zur Fügerichtung. Eine Bewegung quer zur Fügerichtung kann entstehen, wenn die Elemente beispielsweise nicht passgenau zusammengefügt werden oder ein Element um dessen Längsachse verdreht montiert wird oder das Element mit einer Neigung zu seiner Längsachse montiert werden muss. Mit einer seitlichen Führung muss der Monteur keine weiteren Anstrengungen unternehmen, um eine enge Verbindung zwischen zwei Elementen herzustellen.

Vor dem zweiten Schritt können die Verbindungsmittel jeweils an einem oder beiden Elementen befestigt werden. Dies ermöglicht ein fortlaufendes Verlegen der Elemente. Ausserdem können sowohl Elemente als auch Verbindungsmittel separat zur Baustelle transportiert werden, was ein dichteres Packen auf einem entsprechenden Transportgerät ermöglicht. Ausserdem wird das Transportieren auf die Baustelle vereinfacht und die Gefahr der Beschädigung der Verbindungsmittel und der Elemente verringert.

In einem weiteren Schritt können die Elemente mit Mitteln zum Abstützen versehen werden, die beispielsweise als eine Art Fuss ausgebildet sein können. Besonders vorteilhaft ist der Einsatz von höhenverstellbaren Füssen, da ein Element in der Höhe ausgerichtet werden kann. Mit höhenverstellbaren Füssen ist eine präzise Nivellierung möglich. Ein zweites Element wird an seinem dem ersten Element abgewandten Endbereich mit derartigen Füssen unterstützt und nivelliert.

Somit können auf der Baustelle in einem Lagerbereich die Elemente abgeladen werden, und mit Verbindungsmitteln bestückt werden. Anschliessend können die Elemente mit einem Gabelstapler direkt in der Baugrube oder mit einem Kran vom Lagerbereich zum Ort der zu erstellenden Verbindung transportiert werden. Von besonderem Vorteil ist die Möglichkeit, dass beim Transport mit einem Gabelstapler ein Baukran an einem Ort montiert werden kann und nicht, je nach Fortschritt der Fertigstellung des Kanals immer ungefähr an dem Ort aufgebaut werden muss, an dem ein Kanal sein vorläufiges Ende hat. Mit einem Gabelstapler ist es möglich, Element an der gleichen Stelle in Empfang zu nehmen und es direkt zu dessen Einsatzort zu verschieben und zu verlegen.

Bei dieser Montagemethode kann es vorteilhaft sein, wenn vorgängig auf den Elementen eine weitere Justierhilfe montiert wird, die es ermöglicht, einem herantransportierten Element eine grobe Richtung zuzuweisen. Eine solche Justierhilfe kann beispielsweise ein geneigtes Rohr sein, das auf einem ersten Element montiert ist. An einem weiteren Element können ein zweites gebogenes Rohr oder zwei überkreuzte Rohre befestigt sein und eine Art Lasche bilden. Eine solchermassen gestaltete Lasche ist dazu geeignet, ein geneigtes Rohr einzufangen und entlang dem Rohr in einer gleitenden Bewegung verschiebbar zu sein um ein Element entsprechend zu führen.

Vorteilhaft wird in einer Baugrube vor dem ersten Schritt eine erste, zumindest teilweise plane Fläche erstellt, auf der die Elemente verlegt werden können. Das erste Element kann mit einem entsprechenden Abstand zu dieser Fläche aufgestellt und ausgerichtet werden. Besonders vorteilhaft steht das Element auf höhenverstellbaren Füssen. Typischerweise wird ein solches Element mit einer Neigung von 0.25% bis 5%, bevorzugt von 0.5% bis 4% und besonders bevorzugt von 0.75% bis 2.5% zur Waagerechten, bzw. zu einer waagrechten Ebene, montiert. Das zweite Element kann anschliessend an das erste Element angefügt und an einem, dem ersten Element abgewandten, Ende horizontal abgestützt werden. Die Verbindungsmittel stützen das zweite Element an seiner dem ersten Element zugewandten Ende ab. Somit muss dieses und jedes weitere Element nur noch an einer Seite gestützt werden. Diese Abstützung erfolgt vorteilhaft mit einer Art höhenverstellbarem Fuss. Solche Füsse können derart ausgestaltet sein, dass sie die Elemente auch gegen abhebende Kräfte sichern. Somit kann sich ein Kanal aus solchen Elemente beim kompletten Eingiessen nicht mehr bewegen und insbesondere nicht aufschwimmen.

Die einzelnen Verfahrensschritte können beliebig oft wiederholt und so eine Vielzahl von Elementen aneinander gereiht werden.

In einem weiteren Schritt können die Elemente zumindest in einem ersten Bereich mit einem geeigneten Material, insbesondere mit einer Mischung aus Zement mit weiteren Zusatzstoffen hinterfüllt werden. Solche Mischungen sind in vielerlei Varianten von Beton bekannt. Insbesondere sind auch alle Arten von Stahlbeton von Vorteil. Ein solcher erster Bereich kann bis zu einer Auflageseite eines Elementes reichen, vorteilhaft aber beispielsweise ein Drittel des Elementes umfassen, mindestens aber eine Tangentialebene parallel zur und durch die Auflageseite überschreiten. Typischerweise ist eine solche Tangentialebene durch die am tiefsten liegenden Ausformungen des Elementes definiert. Es ist aber auch denkbar, dass der erste Bereich höher reicht, beispielsweise bis zu einer Längsachse der Elemente. Auch weitere Varianten sind vorstellbar. Wird die Hinterfüllung höher als bis zu der Tangentialebene erstellt, so ergibt sich für das Element ein dreiseitiger Formschluss. Dieser Formschluss ist besonders geeignet, das Element gegen etwaige Lageverschiebungen zu sichern. Durch diesen Formschluss ist es denkbar, eine statisch wirksame Verbindung zwischen dem Kanalelement und der Hinterfüllung zu erstellen.

Unter Hinterfüllen wird eine Tätigkeit oder ein Arbeitschritt verstanden, bei der beispielsweise eine Öffnung oder ein Hohlraum, der nicht vollständig einsehbar ist, mit Material aufgefüllt wird.

Vor dem Hinterfüllen des ersten Bereiches können die Elemente mit Gewicht beaufschlagt werden. Dies kann dadurch geschehen, dass Gewichte, beispielsweise Steine, Sandsäcke oder aber auch Behälter, die mit Wasser gefüllt sind oder werden können, auf die Elemente gelegt werden. Es ist aber auch vorstellbar, dass bei Kanalelementen in die nunmehr durch alle Elemente durchgehende Öffnung eine Art Schlauch oder Sack gelegt werden kann, der beispielsweise mit Sand, vorteilhaft aber mit Wasser gefüllt wird oder befüllbar ist. Solche mit Gewicht beaufschlagten Elemente können nun gefahrlos mit Material hinterfüllt werden, ohne dass sich diese durch den Auftrieb aus ihrer Lage verschieben. Wie bereits erwähnt können auch die Füsse zur horizontalen Abstützung so ausgeführt sein, dass sie die Elemente gegen ein Abheben sichern.

In einem weiteren Schritt kann der Raum um die Elemente nach dem Hinterfüllen des ersten Bereiches in einem weiteren Bereich mit einem geeigneten Material ausgefüllt werden. Ein geeignetes Material kann beispielsweise Zement mit weiteren Zusatzstoffen sein. Solche Mischungen sind in vielerlei Varianten von Beton bekannt. Insbesondere sind auch alle Arten von Stahlbeton von Vorteil. Der weitere Bereich schliesst an den ersten Bereich an und kann das ganze Element umschliessen. Es ist aber auch vorstellbar, dass der zweite Bereich nur bis zu einer Längsachse der Elemente reicht, oder nur bis zu einem oberen Bereich und die Elemente nicht oder nur teilweise bedeckt. Entsprechend wird unter dem oberer Bereich ein Bereich oberhalb einer zentralen Längsachse eines Elementes, insbesondere im oberen Drittel eines Elementes und bevorzugt an dessen oberen Ende verstanden. Gleichermassen versteht man unter einem oberen Bereich einen Bereich, der einem im bestimmungsgemässen Gebrauch eine Auflageseite bildenden Bereich abgewandt ist. Es versteht sich von selbst, dass sich die Bezeichnungen auf das Element in seiner bestimmungsgemässen Ausrichtung beziehen. Ebenfalls vorstellbar sind weitere Bereiche, beispielsweise in der Form einer Zwischenschicht zwischen den beiden vorgenannten Bereichen, welche die Verbindung der beiden Bereiche unterstützt.

Die Schritte des Hinterfüllens in einem ersten Bereich und des Auffüllens in einem zweiten Bereich können kombiniert werden und als ein einziger Schritt ausgeführt werden. Dies resultiert in einer erheblichen Zeitersparnis.

Anhand von Figuren, welche lediglich Ausführungsbeispiele darstellen, wird die Erfindung im Folgenden näher erläutert. Es zeigen:
- Figur 1:: eine Vorrichtung zum Verbinden von Elementen in der Draufsicht,
- Figur 2a:: einen Schnitt A-A durch die Vorrichtung gemäss Figur 1,
- Figur 2b:: einen Schnitt A-A durch die Vorrichtung gemäss Figur 1, wobei die Verbindungsmittel zusammengefügt sind,
- Figur 3:: einen Schnitt X-X durch die Vorrichtung gemäss Figur 2b,
- Figur 4:: eine Vorderansicht eines erfindungsgemässen Elementes,
- Figur 5:: eine Seitenansicht des Elementes gemäss Figur 4,
- Figur 6:: einen Schnitt Y-Y durch einen Endbereich des Elementes gemäss Figur 4,
- Figur 7:: eine Seitenansicht eines Kanals, wobei ein weiteres Element angefügt wird,
- Figur 8:: die Seitenansicht gemäss Figur 7, wobei das weitere Element durch seine Gewichtskraft richtig positioniert wird.

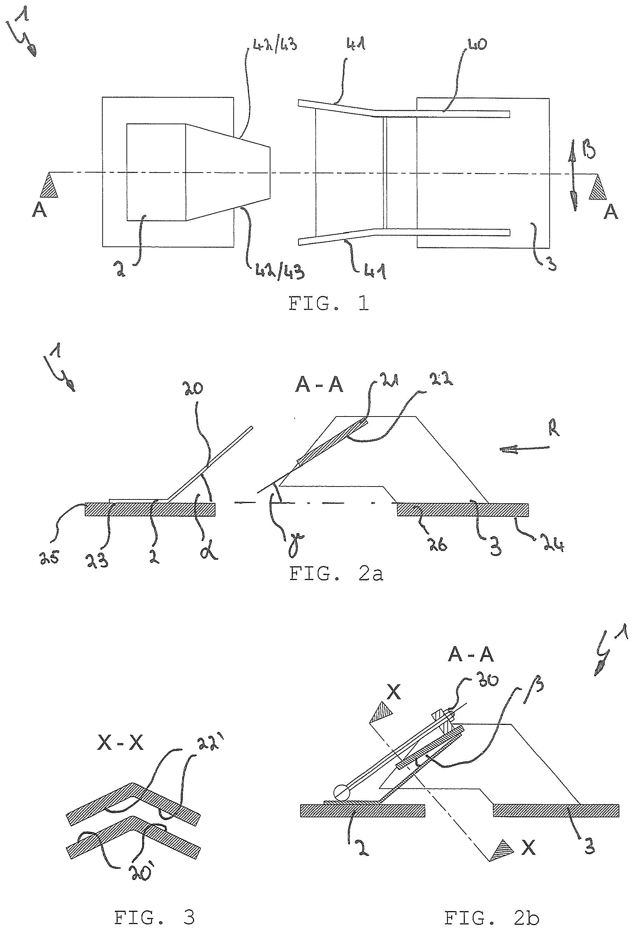

Figur 1, 2a und 2b zeigen eine erfindungsgemässe Vorrichtung 1 sowie einen Schnitt durch die Vorrichtung 1. Die Vorrichtung 1 besteht aus einem ersten Verbindungsmittel 2 und einem zweiten Verbindungsmittel 3. Das erste Verbindungsmittel 2 weist ein Befestigungsmittel 25 mit einer Befestigungsfläche 23 sowie eine Führungsfläche 20 und Führungen 42 auf. Die Führungen 42 weisen einen konischen Führungsbereich 43 auf. Das zweite Verbindungsmittel 3 umfasst Führungen 40 und ein Eingriffsmittel 21 mit einer Eingriffsfläche 22 sowie Befestigungsmittel 26 und eine Befestigungsfläche 24. Die Führungsmittel 40 weisen konische Führungsbereiche 41 auf. Die Führungen 40 des Verbindungsmittels 3 sind im Wesentlichen parallel. Schnitt A-A aus der Figur 2a zeigt die Vorrichtung vor dem Zusammenbau. In der Figur 2b ist der gleiche Schnitt A-A nochmals gezeigt. Die Vorrichtung 1 ist in zusammengebautem Zustand dargestellt, nachdem das Verbindungsmittel 3 in Fügerichtung R über das Verbindungsmittel 2 abgesenkt wurde. In der Figur 2b ist erkennbar, dass im oberen Bereich des Mittels 21 eine Art Flansch, an dem eine Spannverbindung angreift, befestigt ist. Der Flansch weist ein Loch auf, um eine Spannschraube 30 durch- bzw. einzuführen. Alternativ kann auch ein Schlitz vorgesehen sein. Da diese Spannschraube 30 optional ist, ist sie in den Figuren 1 und 2a aus Gründen der Übersichtlichkeit nicht gezeigt. Das Eingriffselement 21 des zweiten Verbindungsmittels 3 besitzt eine Eingriffsfläche 22 die mit einem Winkel β zu der Führungsfläche 20 beziehungsweise einem Winkel γ gegenüber der Befestigungsfläche 24 geneigt ist. Die Führungsfläche 20 ist mit einem Winkel α gegenüber der Befestigungsfläche 23 geneigt. Beim Zusammenbau wird das zweite Verbindungsmittel 3 über die Führungsfläche 20 des Verbindungsmittels 2 gebracht, so dass die Führungsfläche 20 und die Eingriffsfläche 22 in Wirkverbindung treten. Nun gleitet das zweite Verbindungsmittel 3 entlang der Führungsfläche 20 bis in eine Endlage. In dieser Endlage kann das zweite Verbindungsmittel nun mit der Spannschraube 30 fixiert werden.

Figur 3 zeigt einen Schnitt entlang der Linie X-X gemäss Figur 2b durch eine Ausführungsform des ersten Verbindungsmittels 2 mit seiner Führungsfläche 20 und des zweiten Verbindungsmittels 3 mit dem Eingriffselement 21 mit seiner Eingriffsfläche 22. Die Eingriffsfläche sowie die Führungsfläche sind je mit einer Biegung versehen und in Teilflächen 20', 22' aufgeteilt.

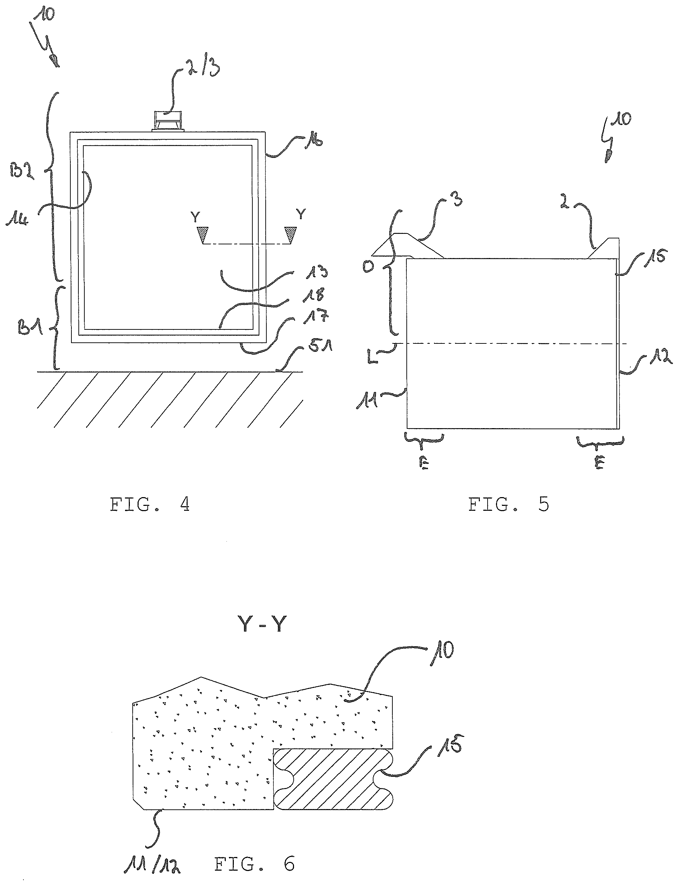

Figur 4 zeigt eine Ansicht einer Stirnseite (11) eines Endbereiches (E) (siehe Figur 5) eines erfindungsgemässen Elementes 10 mit einem ersten Verbindungsmittel 2 und einem zweiten Verbindungsmittel 3. Eine Innenkontur 14 des Elementes 10 umschliesst eine Öffnung 13 des Elementes 10 und ist rechteckig ausgebildet. In einer Bodenfläche 18 kann eine separate Rinne vorgesehen sein, die Bodenfläche 18 kann dann beispielsweise beidseitig der Rinne und zur Rinne hin geneigt sein. Es können auch mehrere Rinnen vorgesehen sein. Der Einfachheit halber sind sie nicht dargestellt. Eine Aussenkontur 16 ist mit einer Wandstärke von der Innenkontur 14 beabstandet. Die Oberfläche dieser Aussenkontur 16 kann glatt oder rau sein, insbesondere dergestalt, dass die Oberfläche zur Weiterbehandlung vorbereitet ist. Das Element 10 ist mit einem Abstand zu einer ersten Fläche 51 dargestellt. Der Bereich B1 ist in einem Verfahrensschritt zum Hinterfüllen vorgesehen, wobei der Bereich B1 durch eine Markierung auf der Oberfläche der Aussenkontur angezeigt werden kann. Es ist auch denkbar, dass der Bereich B1 nur zwischen der Fläche 51 und der Auflageseite 17 des Elementes 10 vorgesehen ist. Bevorzugt reicht er aber bis ungefähr auf die Höhe der Innenkontur 18 oder höher. Ausserdem ist ein Bereich B2 dargestellt, der an den Bereich B1 anschliesst und sich bis in einen oberen Bereich O (siehe Figur 5) des Elementes erstreckt.

Figur 5 zeigt eine Seitenansicht des Elementes 10 gemäss Figur 4, wobei die Verbindungsmittel 2 und 3 nur schematisch dargestellt sind. Sie befinden sich in einem oberen Bereich O des Elementes 10. Dabei bezeichnet ein oberer Bereich O einen Bereich oberhalb der zentralen Längsachse L des Elementes 10, insbesondere im oberen Drittel und bevorzugt am oberen Ende des Elementes. Gleichermassen versteht man unter einem oberen Bereich O einen Bereich, der einem im bestimmungsgemässe Gebrauch eine Auflageseite 17 bildenden Bereich abgewandt ist. Das Element 10 ist vorbereitet, um an ein korrespondierendes Element angefügt zu werden. Gezeigt sind die Stirnseiten 11 und 12 in den Endbereichen E quer zur Längsachse L. Die Stirnseite 12 ist mit einem Dichtmittel 15 versehen.

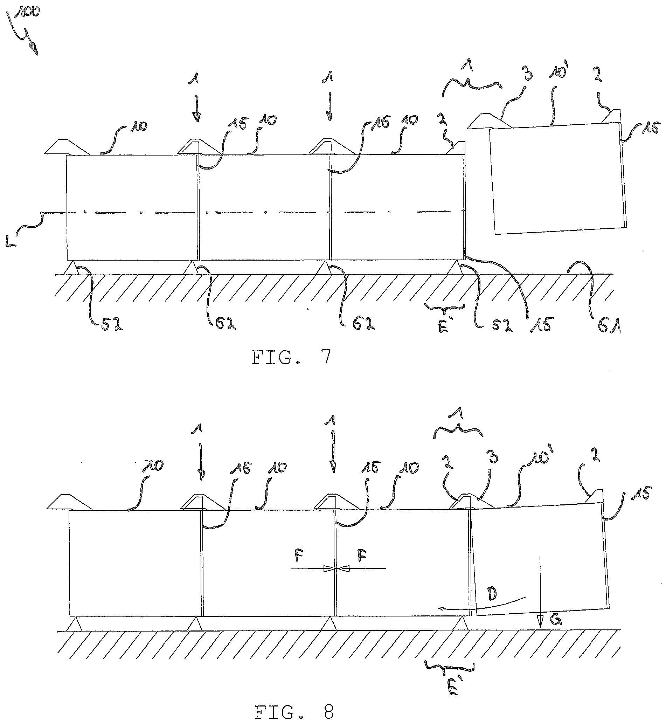

Figur 6 zeigt einen Schnitt entlang der Linie Y-Y gemäss Figur 4. Um an den Endbereichen 11 und 12 den Innenraum des Kanals 100 (vgl. Figur 7) von der Aussenwelt abzuschirmen, ist wenigstens ein Dichtmittel 15 vorgesehen. Vorteilhaft ist dieses Dichtmittel 15 in mindestens einer Stirnseite 11, 12 eingelassen. Hierzu weist das Element 10 beispielsweise eine Vertiefung auf. Alternativ oder zusätzlich können an den Stirnseiten 11, 12 Fasen angebracht sein, die mit einer Dichtmasse ausgestrichen werden können. Es ist auch vorstellbar, dass zumindest eine der Stirnseiten 11, 12 plan ist und beispielsweise mit einer Dichtmasse bestrichen wird.

Figur 7 zeigt einen Kanal 100, bestehend aus einzelnen Elementen 10, 10' welche mittels Vorrichtungen 1 verbunden sind. Das erste Element 10 ist mit zwei Füssen 52 auf der Fläche 51 abgestützt, die folgenden Elemente 10 sind nur noch an deren vom ersten Element abgewandten Seite abgestützt. Diese Füsse 52 können dergestalt sein, dass sie auch abhebende Kräfte aufnehmen können.

Ein weiteres Element 10' wird von einem Lagerplatz herangeführt. Dies kann beispielsweise mit einem Gabelstapler oder aber mit einem Kran oder anderen geeigneten Mitteln geschehen. Bevorzugt wird das Element 10' leicht geneigt zum bereits platzierten Element 10 herangeführt, um ein Einführen des zweiten Verbindungsmittels 3 in das erste Verbindungsmittel 2 zu erleichtern. Es wird an einem Endbereich E' eines ersten Elementes 10 zusammengefügt.

Wie in Figur 8 zu sehen ist, kann das Element 10' abgesenkt werden. Entsprechend der Ausgestaltung der Verbindungsmittel 2, 3 wird das Element 10' zu Element 10 hingezogen und schliesst in einer Drehbewegung D den Spalt an der jeweiligen Stirnseite des Endbereiches E'. Ursache dieser Bewegung ist vor alle die Gewichtskraft G des Elementes 10'. Durch den oberen Drehpunkt wird die Gewichtskraft G in ein Anpresskraft F umgewandelt. Ausserdem begünstigen die geneigte Führungsfläche 20 und die Eingriffsfläche 22 (vgl. Figur 2a) der Verbindungsmittel 2, 3 die Anpresskraft vor allem im oberen Bereich O (vgl. Figur 5) der Elemente 10, 10'.

Aus der Figur 8 geht ebenfalls hervor, dass das Element 10' mit seinem zweiten Verbindungsmittel 3 beim Anfügen an das bereits platzierte Element 10 zumindest in einem Zwischenschritt vollständig am ersten Verbindungsmittel 2 des Elementes 10 hängt. Damit ist die ganze Gewichtskraft des Elementes 10' (idealisiert, ohne Berücksichtigung von Reibung) vom ersten Verbindungselement 2 des Elementes 10 aufgenommen. Aus der Gewichtskraft G resultiert ein Kräftepaar an der Schnittstelle zwischen zwei Elementen. Einerseits kann über das Einstellen der Füsse 52 (siehe Fig. 7) auf die Lagegenauigkeit und ein allfäliiges Gefälle des Elementes 10' Einfluss genommen werden, andererseits kann über die Füsse ein Teil der Gewichtskraft des Elementes 10' aufgenommen werden.

## Patentansprüche

1. Element (10), insbesondere ein Kanalrohrabschnitt zum Aufbau eines Kanals (100), umfassend
- einen ersten Endbereich (E) mit einer Stirnseite (11) und mindestens einen zweiten Endbereich (E) mit einer Stirnseite (12) zum Anschliessen mindestens eines weiteren Elementes (10'),
- einen eine Auflageseite (17) bildenden unteren Bereich und einen von der Auflageseite abgewandten oberen Bereich (O),
- eine durchgehende Öffnung (13) zwischen der ersten Stirnseite (11) und der zweiten Stirnseite (12),
- mindestens ein erstes und ein zweites Verbindungsmittel (2, 3) einer Vorrichtung (1) zum geführten Zusammenfügen eines weiteren Elementes (10') mit dem Element (10),
- wobei das erste Verbindungsmittel (2) mit einem Befestigungsmittel (25) am Element (10) befestigt oder befestigbar ist,
- und wobei das erste Verbindungsmittel (2) in dem oberen Bereich (O) des Elements (10) angeordnet ist,
**dadurch gekennzeichnet, dass**
- das erste Verbindungsmittel (2) ein Führungselement mit mindestens einer Führungsfläche (20) aufweist, welche bei bestimmungsgemässem Gebrauch des Elements zu einer horizontalen Ebene geneigt ist,
- und derart mit einem Eingriffselement (21) des zweiten Verbindungsmittels (3) des weiteren Elementes (10'), zusammenwirkt, dass ein Absenken des weiteren Elementes (10') auf das erste Element (10) ein Zusammenziehen der benachbarten Elemente (10, 10') in der Fügerichtung (R) bewirkt,
- wobei jedes der beiden Verbindungsmittel (2, 3) an den Endbereichen (E) benachbarter Elemente (10, 10') in dem oberen Bereich (O) mit einem Befestigungsmittel (25, 26) befestigbar oder befestigt ist,
- und wobei das erste Verbindungsmittel (2) eine seitliche Führung (42) zur Begrenzung der Relativbewegung (B) quer zur Fügerichtung (R) der Elemente (10, 10') zwischen den Verbindungsmitteln (2, 3) aufweist,
- und wobei die seitliche Führung (42) einen konischen Führungsbereich (43) aufweist.

2. Element (10) nach Anspruch 1, **dadurch gekennzeichnet, dass** wenigstens ein Endbereich (E) Dichtmittel (15) aufweist, um das Element (10) zu einem weiteren Element (10') abzudichten.

3. Element (10) nach einem der Ansprüche 1 und 2, **dadurch gekennzeichnet, dass** das Element (10) Füsse (52), insbesondere höhenverstellbare Füsse (52) zum Abstützen auf einer Fläche (51) aufweist.

4. Element nach einem der Ansprüche 1 bis 3, **dadurch gekennzeichnet, dass** das Befestigungsmittel (25) eine Befestigungsfläche (23) aufweist und insbesondere als Platte ausgebildet ist.

5. Element nach Anspruch 4, **dadurch gekennzeichnet, dass** die geneigte Führungsfläche (20) einen Winkel (α) zur Befestigungsfläche (23) von 15° bis 75° aufweist, bevorzugt von 30° bis 70°, und besonders bevorzugt von 40° bis 60°.

6. Element nach Anspruch 1 bis 5, **dadurch gekennzeichnet, dass** das zweite Verbindungsmittel (3) eine seitliche Führung (40) zur Begrenzung einer Relativbewegung (B) quer zur Fügerichtung (R) der Elemente (10, 10`) zwischen den Verbindungsmitteln aufweist.

7. Element nach einem der Ansprüche 1 bis 5 oder 6, **dadurch gekennzeichnet, dass** das Eingriffselement (21) eine geneigte Eingriffsfläche (22) aufweist, und im bestimmungsgemässen Gebrauch mit der Führungsfläche (20) einen Winkel (β) von 45° bis -15°, bevorzugt von 30° bis 0°, und besonders bevorzugt von 20° bis 10° einschliesst.

8. Element nach einem der Ansprüche 1 bis 7, **dadurch gekennzeichnet, dass** die Führungsfläche (20) und/oder die Eingriffsfläche (22) eine konvexe, bzw. konkave Biegung aufweisen.

9. Element nach einem der Ansprüche 1 bis 9, **dadurch gekennzeichnet, dass** die Vorrichtung Mittel, insbesondere eine Spannschraube (30), zum Sichern und/oder Verspannen der Verbindungsmittel (2, 3) gegeneinander aufweist.

10. Element nach Anspruch 6, **dadurch gekennzeichnet, dass** das erste und das zweite Verbindungsmittel (2, 3) eine seitliche Führung (40, 42) mit einem konischen Führungsbereich aufweisen.

11. Verfahren zum Verlegen von Elementen (10, 10') nach einem der Ansprüche 1 bis 10, umfassend die Schritte:
a) Erstellen einer Fläche (51) zum Auflegen der Elemente (10, 10');
b) Aufstellen und Ausrichten eines ersten Elements (10) gemäss Anspruch 1 umfassend das erste Verbindungsmittel (2) ;
c) Anfügen eines zweiten Elementes (10')gemäss Anspruch 6 umfassend das zweite Verbindungsmittel (3) an das erste Element (10), wobei
- das Eingriffselement (21) des zweiten Verbindungsmittels (3) des zweiten Elements (10') mit der geneigten Führungsfläche (20) des Führungselementes des ersten Verbindungsmittels (2) des ersten Elementes (10) derart zusammenwirkt, dass ein Absenken des zweiten Elementes (10`) auf das erste Element (10) ein Zusammenziehen der beiden Elemente (10, 10') in einer Fügerichtung (R) bewirkt und wenigstens ein Verbindungsmittel (2, 3) eine seitliche Relativbewegung (B) quer zur Fügerichtung (R) der Elemente (10, 10') zwischen den Elementen (10, 10') begrenzt,
- und wobei durch den konischen Führungsbereich eine beim Zusammenführen der Verbindungsmittel (2, 3) eine zu deren Längsachse zentrische Ausrichtung des zweiten Elements (10') erreicht wird.

12. Verfahren nach Anspruch 11, umfassend den weiteren Schritt, dass das zweite Element (10') an seinem dem ersten Element (10) abgewandten Endbereich (B') mit Füssen (52), insbesondere mit in der Höhe einstellbaren Füssen (52) abgestützt wird.

13. Verfahren nach Anspruch 11 oder 12, **dadurch gekennzeichnet, dass** das zweite und weitere Element (10') jeweils an der gleichen Stelle an eine Transporteinrichtung, insbesondere an einen Gabelstapler, übergeben werden, und diese zweiten und weiteren Elemente 10') mittels dieser Transporteinrichtung verlegt werden.

14. Verfahren nach einem der Ansprüche 11 bis 13, **dadurch gekennzeichnet, dass** vor dem Anfügen des zweiten Elementes (10') die Elemente (10, 10') mit einer Justierhilfe ausgerüstet werden.

## Claims

1. Element (10), in particular a sewer pipe section for constructing a sewer (100), comprising
- a first end region (E) having an end side (11) and at least one second end region (E) having an end side (12) for connecting at least one further element (10');
- a lower region that forms a bearing side (17), and an upper region (O) that faces away from the bearing side;
- a continuous opening (13) between the first end side (11) and the second end side (12);
- at least one first and one second connection means (2, 3) of a device (1) for the guided joining of one further element (10') to the element (10);
- wherein the first connection means (2) is fastened or fastenable to the element (10) by way of a fastening means (25);
- wherein the first connection means (2) has a guide element having at least one guiding face (20) which in the intended use of the element is inclined in relation to a horizontal plane,
- and interacts with an engagement element (21) of the second connection means (3) of the further element (10') in such a manner that lowering of the further element (10') onto the first element (10) causes a contraction of the neighbouring elements (10, 10') in the joining direction (R);
- and wherein the first connection means (2) has a lateral guide (42) for delimiting the relative movement (B) transversely to the joining direction (R) of the elements (10, 10') between the connection means (2, 3),
**characterized in that** the lateral guide (42) has a conical guiding region (43), and **in that** each of the two connection means (2, 3) at the end regions (E) of neighbouring elements (10, 10') in the upper region (O) is fastenable or fastened by way of a fastening means (25, 26).

2. Element (10) according to Claim 1, **characterized in that** at least one end region (E) has sealing means (15) so as to seal the element (10) in relation to a further element (10').

3. Element (10) according to one of Claims 1 and 2, **characterized in that** the element (10) has feet (52), in particular height-adjustable feet (52), for support on a face (51).

4. Element according to one of Claims 1 to 3, **characterized in that** the fastening means (25) has a fastening face (23) and is in particular configured as a plate.

5. Element according to Claim 4, **characterized in that** the inclined guiding face (20) in relation to the fastening face (23) has an angle (α) of 15° to 75°, preferably for 30° to 70°, and particularly preferably of 40° to 60°.

6. Element according to Claim 1 to 5, **characterized in that** the second connection means (3) has a lateral guide (40) for delimiting a relative movement (B) transversely to the joining direction (R) of the elements (10, 10') between the connection means.

7. Element according to one of Claims 1 to 5 or 6, **characterized in that** the engagement element (21) has an inclined engagement face (22) and in the intended use, conjointly with the guiding face (20), encloses an angle (β) of 45° to -15°, preferably of 30° to 0°, and particularly preferably of 20° to 10°.

8. Element according to one of Claims 1 to 7, **characterized in that** the guiding face (20) and/or the engagement face (22) have/has a convex or concave bend, respectively.

9. Element according to one of Claims 1 to 8, **characterized in that** the device has means, in particular a straining screw (30), for mutually securing and/or bracing the connection means (2, 3) .

10. Element according to Claim 6, **characterized in that** the first and the second connection means (2, 3) have a lateral guide (40, 42) having a conical guiding region.

11. Method for installing elements (10, 10') according to one of Claims 1 to 10, comprising the following steps:
a) establishing a face (51) for placing the elements (10, 10');
b) setting up and aligning a first element (10) according to Claim 1, comprising the first connection means (2);
c) joining a second element (10') according to Claim 6, comprising the second connection means (3), to the first element (10), wherein
- the engagement element (21) of the second connection means (3) of the second element (10') interacts with the inclined guiding face (20) of the guide element of the first connection means (2) of the first element (10) in such a manner that lowering the second element (10') onto the first element (10) causes a contraction of the two elements (10, 10') in a joining direction (R), and at least one connection means (2, 3) delimits a lateral relative movement (B) between the elements (10, 10') transversely to the joining direction (R) of the elements (10, 10');
- and wherein, on account of the conical guiding region, an alignment of the second element (10') that is centric in relation to the longitudinal axis of the connection means (2, 3) is achieved when bringing together said connection means (2, 3).

12. Method according to Claim 11, comprising the further step that the second element (10') at the end region (B') thereof that faces away from the first element (10) is supported by way of feet (52), in particular by way of feet (52) that are adjustable in terms of height.

13. Method according to Claim 11 or 12, **characterized in that** the second and further element (10') are in each case transferred to a transport installation, in particular to a forklift truck, at the same location, and said second and further elements (10') are installed by means of said transport installation.

14. Method according to one of Claims 11 to 13, **characterized in that** the elements (10, 10') prior to the joining of the second element (10') are equipped with an adjustment aid.

## Revendications

1. Élément (10), en particulier section tubulaire de canal pour recevoir un canal (100), comprenant
- une première région d'extrémité (E) avec un côté frontal (11) et au moins une deuxième région d'extrémité (E) avec un côté frontal (12) pour le raccordement d'au moins un élément supplémentaire (10'),
- une région inférieure formant un côté d'appui (17) et une région supérieure (O) opposée au côté d'appui,
- une ouverture traversante (13) entre le premier côté frontal (11) et le deuxième côté frontal (12),
- au moins un premier et un deuxième moyen de liaison (2, 3) d'un dispositif (1) pour l'assemblage guidé d'un élément supplémentaire (10') à l'élément (10),
- dans lequel le premier moyen de liaison (2) est ou peut être fixé à l'élément (10) par un moyen de fixation (25),
- dans lequel le premier moyen de liaison (2) présente un élément de guidage avec au moins une surface de guidage (20), qui, lors de l'utilisation conforme de l'élément, est inclinée par rapport à un plan horizontal,
- et coopère avec un élément d'engagement (21) du deuxième moyen de liaison (3) de l'élément supplémentaire (10') de telle sorte qu'un abaissement de l'élément supplémentaire (10') sur le premier élément (10) provoque un resserrement l'un vers l'autre des éléments adjacents (10, 10') dans la direction d'assemblage (R),
- et dans lequel le premier moyen de liaison (2) présente un guidage latéral (42) pour limiter le mouvement relatif (B) transversalement à la direction d'assemblage (R) des éléments (10, 10') entre les moyens de liaison (2, 3),
**caractérisé en ce que**
le guidage latéral (42) présente une région de guidage conique (43) et **en ce que** chacun des deux moyens de liaison (2, 3) est ou peut être fixé aux régions d'extrémité (E) d'éléments adjacents (10, 10') dans la région supérieure (O) avec un moyen de fixation (25, 26).

2. Élément (10) selon la revendication 1, **caractérisé en ce qu'**au moins une région d'extrémité (E) présente des moyens d'étanchéité (15) pour étanchéifier l'élément (10) par rapport à un élément supplémentaire (10').

3. Élément (10) selon l'une quelconque des revendications 1 et 2, **caractérisé en ce que** l'élément (10) présente des pieds (52), en particulier des pieds réglables en hauteur (52) pour le support sur une surface (51).

4. Élément selon l'une quelconque des revendications 1 à 3, **caractérisé en ce que** le moyen de fixation (25) présente une surface de fixation (23) et est notamment réalisé sous forme de plaque.

5. Élément selon la revendication 4, **caractérisé en ce que** la surface de guidage inclinée (20) présente un angle (α) par rapport à la surface de fixation (23) de 15° à 75°, de préférence de 30° à 70°, et particulièrement préférablement de 40° à 60°.

6. Élément selon les revendications 1 à 5, **caractérisé en ce que** le deuxième moyen de liaison (3) présente un guidage latéral (40) pour limiter un mouvement relatif (B) transversalement à la direction d'assemblage (R) des éléments (10, 10') entre les moyens de liaison.

7. Élément selon l'une quelconque des revendications 1 à 5 ou 6, **caractérisé en ce que** l'élément d'engagement (21) présente une surface d'engagement inclinée (22) et, lors de l'utilisation conforme, forme avec la surface de guidage (20) un angle (β) de 45° à -15°, de préférence de 30° à 0°, et particulièrement préférablement de 20° à 10°.

8. Élément selon l'une quelconque des revendications 1 à 7, **caractérisé en ce que** la surface de guidage (20) et/ou la surface d'engagement (22) présentent une courbure convexe, respectivement concave.

9. Élément selon l'une quelconque des revendications 1 à 8, **caractérisé en ce que** le dispositif présente des moyens, en particulier une vis de serrage (30), pour fixer et/ou serrer les moyens de liaison (2, 3) l'un contre l'autre.

10. Élément selon la revendication 6, **caractérisé en ce que** le premier et le deuxième moyen de liaison (2, 3) présentent un guidage latéral (40, 42) avec une région de guidage conique.

11. Procédé de pose d'éléments (10, 10') selon l'une quelconque des revendications 1 à 10, comprenant les étapes consistant à :
a) fabriquer une surface (51) pour poser les éléments (10, 10') ;
b) poser et orienter un premier élément (10) selon la revendication 1 comprenant le premier moyen de liaison (2) ;
c) joindre un deuxième élément (10') selon la revendication 6 comprenant le deuxième moyen de liaison (3) au premier élément (10), dans lequel
- l'élément d'engagement (21) du deuxième moyen de liaison (3) du deuxième élément (10') coopère avec la surface de guidage inclinée (20) de l'élément de guidage du premier moyen de liaison (2) du premier élément (10) de telle sorte qu'un abaissement du deuxième élément (10') sur le premier élément (10) provoque un resserrement l'un vers l'autre des deux éléments (10, 10') dans une direction d'assemblage (R) et au moins un moyen de liaison (2, 3) limite un mouvement latéral relatif (B) entre les éléments (10, 10'), transversalement à la direction d'assemblage (R) des éléments (10, 10'),
- et dans lequel on obtient, par la région de guidage conique, lors de l'assemblage l'un à l'autre des moyens de liaison (2, 3), une orientation du deuxième élément (10') centrée par rapport à leur axe longitudinal.

12. Procédé selon la revendication 11, comprenant l'étape supplémentaire selon laquelle le deuxième élément (10') est supporté au niveau de sa région d'extrémité (B') opposée au premier élément (10) par des pieds (52), en particulier des pieds (52) pouvant être ajustés en hauteur.

13. Procédé selon la revendication 11 ou 12, **caractérisé en ce que** les deuxièmes éléments, les éléments supplémentaires (10'), sont à chaque fois transférés au même endroit au niveau d'un dispositif de transport, en particulier au niveau d'un chariot élévateur à fourche, et ces deuxièmes éléments, les éléments supplémentaires (10'), sont posés au moyen de ce dispositif de transport.

14. Procédé selon l'une quelconque des revendications 11 à 13, **caractérisé en ce qu'**avant l'assemblage du deuxième élément (10'), les éléments (10, 10') sont équipés d'un auxiliaire d'ajustement.
